# EUROPÄISCHE PATENTSCHRIFT

(11) **EP 0 895 336 B1**
(45) Veröffentlichungstag und Bekanntmachung des Hinweises auf die Patenterteilung: **30.01.2002**
(21) Anmeldenummer: 98113662.5
(22) Anmeldetag: 22.07.1998
(51) Int. Cl.: H02K 17/04, H02K 3/46

(54) **Induktionsmotor, insbesondere Einphasenasynchronmotor**
Induction motor in particular single-phase asynchronous motor
Moteur à induction, en particulier, moteur asynchrone monophasé

(30) Priorität: 01.08.1997 DE 19733228
(43) Veröffentlichungstag der Anmeldung: 03.02.1999
(73) Patentinhaber: FHP Motors GmbH, 26133 Oldenburg (DE)
(72) Erfinder: Müller, Udo, 26203 Hundsmühlen (DE)
(74) Vertreter: Jabbusch, Wolfgang, Dr.Jur.

(56) Entgegenhaltungen:
- DE-A- 3 641 622
- PATENT ABSTRACTS OF JAPAN vol. 004, no. 067 (E-011), 20. Mai 1980 (1980-05-20) & JP 55 037876 A (HITACHI LTD), 17. März 1980 (1980-03-17)
- PATENT ABSTRACTS OF JAPAN vol. 008, no. 185 (E-262), 24. August 1984 (1984-08-24) & JP 59 076155 A (HITACHI SEISAKUSHO KK), 1. Mai 1984 (1984-05-01)

## Beschreibung

Die Erfindung betrifft einen Induktionsmotor, insbesondere einen Einphasenasynchronmotor der im Oberbegriff des Patentanspruchs 1 angegebenen Art.
Es sind bereits Einphasenasynchronmotoren mit im Ständer untergebrachter Haupt- und Hilfswicklung bekannt, bei denen die Hilfswicklung gegenüber der Hauptwicklung räumlich versetzt ist und aus zwei spiegelbildlich zueinander angeordneten Kurzschlußbügeln besteht, von denen jeder eine Nutengruppe umfaßt und zwei Bügelseiten in Nuten der umfaßten Gruppe liegen, die je eine Seite einer äußeren Teilspule der Hauptwicklung enthalten. Diese Bügelseiten setzen sich in auf den beiden Stirnflächen des Ständerblechpakets aufliegenden Ringsektoren fort, wodurch sich ein Kurzschlußkreis ergibt. Die beiden Nutanteile jedes Kurzschlußbügels kommen dabei mit Nutanteilen zweier verschiedener Teilspulen zusammen und werden von diesen induziert. Dadurch wird erreicht, daß die Phasenlage des Stromes in der Kurzschlußwicklung eine andere ist als diejenige in der Hauptwicklung. Da die Kurzschlußwicklung gleichzeitig räumlich gegen die Hauptwicklung versetzt ist, ergibt sich ein etwa elliptisches Drehfeld.
Weiterhin ist durch die DE 36 45 262 C2 ein Elektromotor in Form eines Induktionsmotors mit verteilter Statorhauptwicklung bekannt, die aus einer Wicklung I und einer dazu spiegelbildlich angeordneten Wicklung II besteht.
Um das Anlaufen dieses einfachen und robusten Elektromotors mit 24 Nuten in dem Stator zu verbessern, ist eine kurzgeschlossene Hilfswicklung vorgesehen, die aus zwei bügelförmigen Kurzschlußringen besteht, die den Statornuten 6 und 11 bzw. den Statornuten 18 und 23 zugeordnet sind. Da die eine Seite der Kurzschlußringe zusammen mit einer Hauptwicklung in einer Nut liegt, kann die Isolation der Hauptphase durch auftretende hohe Temperaturen in der Hilfsphase beschädigt werden.

Ein weiterer Nachteil dieses Induktionsmotors besteht darin, daß die Hilfsphase in den Statornuten nicht fest angeordnet sind. Die Seiten der Kurzschlußringe können daher klappern und unangenehme Geräusche erzeugen.

Der Erfindung liegt die Aufgabe zugrunde, einen Induktionsmotor, insbesondere einen Einphasensynchronmotor der im Oberbegriff des Patentanspruchs 1 angegebenen Art zu schaffen, der einfach und robust ist, keine zusätzlichen Anlaufhilfen wie Kondensatoren oder Drossel benötigt und einen sicheren Anlauf gewährleistet. Diese Aufgabe wird durch die im Patentanspruch 1 gekennzeichnete Erfindung gelöst.

Ein Vorteil des erfindungsgemäßen Induktionsmotors besteht darin, daß die Hauptphase so in den Statornuten verlegt ist, daß jeweils eine freie Nut für die Hilfsphase zur Verfügung steht. Hierdurch wird eine Beschädigung der Isolation der Hauptphase durch die in Hilfsphase auftretenden hohen Temperaturen vermieden.
Durch eine vorteilhafte Ausgestaltung des Erfindungsgegenstandes nach den Patentansprüchen 4, 5 oder 6 wird ein Festsitz der Kurzschlußringe in den Statornuten erzielt, wodurch ein geräuscharmer Induktionsmotor geschaffen wird.
Weitere vorteilhafte Ausgestaltungen des Erfindungegenstandes sind den weiteren Unteransprüchen zu entnehmen.

Die Erfindung wird anhand von Ausführungsbeispielen im Folgenden näher beschrieben. Es zeigen:

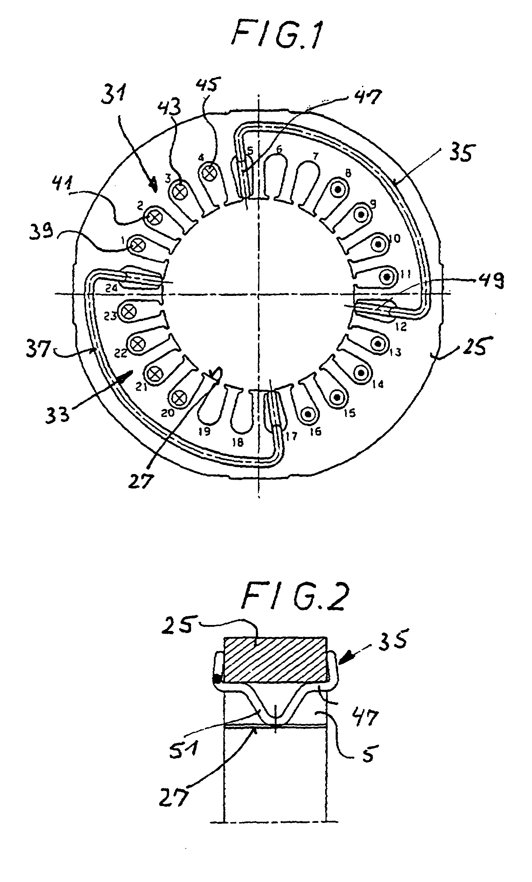

- Figur 1: einen schematischen Querschnitt durch den erfindungsgemäßen Induktionsmotor,
- Figur 2: eine erste Ausführungsform der Befestigung der Kurzschlußringe in den Statornuten
- Figur 3: eine zweite Ausführungsform der Befestigung der Kurzschlußringe in den Statornuten und
- Figur 4: eine Einzelheit aus Figur 3 im Schnitt.

Der erfindungsgemäße Induktionsmotor ist ein Einphasenasynchronmotor mit 24 Nuten 1 - 12 und 13 - 24 in einem Stator 25, die von einer zentralen Statorbohrung 27 aus zugänglich und in Umfangsrichtung in gleichmäßigen Abständen hintereinander angeordnet sind. Der Einphasenasynchronmotor weist eine Staatorhauptwicklung auf, die aus einer Wicklung 31 und einer dazu spiegelbildlich angeordneten Wicklung 33 besteht, wobei die Symmetrieebene durch die Motorachse verläuft. Zum Anlaufen des Einphasenasynchronmotors ist eine kurzgesschlossene gegenüber der Hauptphase versetzt angeordnete Hilfsphase vorgesehen, die von zwei bügelförmigen Kurzschlußringen 35, 37 gebildet ist. Die 24 Nuten in dem Stator 25 sind zur Aufnahme von Teilspulen 39, 41, 43 45 der Wicklungen 31 und 33 und der Kurzschlußringe 35, 37 vorgesehen. Die aus den vier Teilspulen 39, 41, 43, 45 bestehende Hauptwicklung weist eine Spulenweite auf, derart, daß in der Mitte drei Nuten 5, 6, 7 bzw. 17, 18 19 frei bleiben. Die aus den Kurzschlußringen 35, 37 bestehende Hilfswicklung ist einer der drei freibleibenden Nuten 5, 6, 7 bzw. 17, 18, 19 und eine außerhalb der Hauptwicklung in dem Stator 25 angeordnete Nut 12 bzw. 24 zugeordnet. Insbesondere sind hierbei die Kurzschlußringe 35, 37 den freien Statornuten 5 und 12 sowie den freien Statornuten 17 und 24 zugeordnet.
Um Klappergeräusche der Seiten 47, 49 der Kurzschlußringe 35, 37 in den Statornuten 5 und 12 bzw. 17 und 24 zu verhindern, sind diese in den Statornuten 5 und 12 bzw. 17 und 24 fest angeordnet. Zu diesem Zweck weisen die in den Nuten 5 und 12; 17 und 24 des Stators 25 befindlichen Seiten 47, 49 je eine V-förmige, federnde Haltezunge 51 auf.

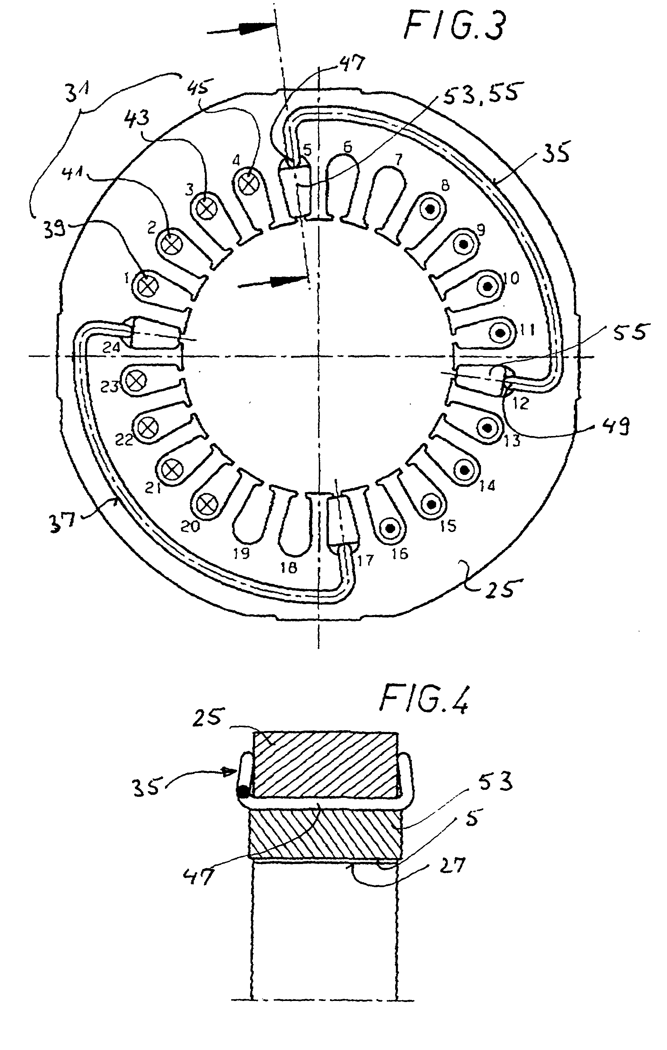

Im Rahmen der Erfindung können die Seiten 47, 49 der bügelförmigen Kurzschlußringe 35, 37 mittels keilförmiger Befestigungselemente 53, 55 in den Nuten 5 und 12 bzw. 17 und 24 des Stators 25 arretiert werden, siehe Figuren 3 und 4. Auch hierdurch wird ein Klappern der Seiten 47, 49 in den Nuten 5 und 12; 17 und 24 sicher verhindert.

## Patentansprüche

1. Induktionsmotor, insbesondere Einphasenasynchronmotor mit einer Statorhauptwicklung (I, II) und einer zu dieser versetzt angeordneten, kurz geschlossenen Hilfswicklung, wobei der Stator (25) in Umfangsrichtung hintereinander angeordnete Nuten (1-24) für die Aufnahme von Teilspulen (39,41,43,45) der Hauptwicklung (I, II) und der Hilfswicklung aufweist, **dadurch gekennzeichnet, daß** die Hauptwicklung (I, II) aus vier Teilspulen (39, 41, 43, 45) besteht, deren Spulenweite so gewählt ist, daß in der Mitte drei Nuten (5, 6, 7; 17, 18, 19) freibleiben, und daß die Hilfswicklung einer der drei zentral freibleibenden Nuten (5, 6, 7; 17, 18, 19) und einer außerhalb der Hauptwicklung (I, II) in dem Stator (25) eingearbeiteten freien Nut (12, 24) zugeordnet ist.

2. Induktionsmotor nach Anspruch 1, wobei die Statorhauptwicklung aus einer Wicklung (I) und einer dazu spiegelbildlich angeordneten Wicklung (II) besteht, die Symetrieachse durch die Motorachse verläuft und wobei jeder der Wicklungen (I und II) eine Hilfswicklung zugeordnet ist, **dadurch gekennzeichnet, daß** der Stator (25) in Umfangsrichtung 24 hintereinander angeordnete Nuten (1 - 12 und 13 - 24) für die Aufnahme der Teilspulen (39, 41, 43, 45) der Wicklungen (I und II) und der beiden Hilfswicklungen aufweist.

3. Induktionsmotor nach Anspruch 2, **dadurch gekennzeichnet, daß** die Hilfswicklungen aus bügelförmigen Kurzschlußringen (35, 37) bestehen, welche als Kurzschlußwindungen den freien Statornuten (5 und 12) sowie den freien Statornuten (17 und 24) zugeordnet sind.

4. Induktionsmotor nach Anspruch 3, **dadurch gekennzeichnet, daß** die bügelförmigen Kurzschlußringe (35, 37) in den Nuten (5 und 12; 17 und 24) fest angeordnet sind.

5. Induktionsmotor nach Anspruch 4, **dadurch gekennzeichnet, daß** die in den Nuten (5 und 12, 17 und 24) des Stators (25) befindlichen Seiten (47, 49) der bügelförmigen Kurzschlußringe (35, 37) je eine V-förmige, federnde Haltezunge (51) aufweisen.

6. Induktionsmotor nach Anspruch 4, **dadurch gekennzeichnet, daß** die Seiten (45, 47) der bügelförmigen Kurzschlußringe (35, 37) mittels keilförmiger Befestigungselemente (53) in den Nuten (5 und 12; 17 und 24) des Stators (25) arretierbar sind.

## Claims

1. Induction motor, in particular a single-phase asynchronous motor having a main stator winding (I, II) and a short-circuited auxiliary winding arranged offset with respect to it, with the stator (25) having slots (1-24), which are arranged one behind the other in the circumferential direction, for holding coil elements (39, 41, 43, 45) of the main winding (I, II) and of the auxiliary winding, **characterized in that** the main winding (I, II) comprises four coil elements (39, 41, 43, 45), whose coil pitch is selected such that three slots (5, 6, 7; 17, 18, 19) remain free in the centre, and **in that** the auxiliary winding is allocated to one of the three slots (5, 6, 7; 17, 18, 19) which remain free in the centre, and to a free slot (12, 24) incorporated in the stator (25) outside the main winding (I, II).

2. Induction motor according to Claim 1, in which the main stator winding comprises a winding (I) and a winding (II) arranged in mirror-image form with respect to it, the axis of symmetry passes through the motor axis, and in which each of the windings (I and II) has an associated auxiliary winding, **characterized in that** the stator (25) has slots (1-12 and 13-24), which are arranged one behind the other in the circumferential direction 24, for holding the coil elements (39, 41, 43, 45) of the windings (I and II) and of the two auxiliary windings.

3. Induction motor according to Claim 2, **characterized in that** the auxiliary windings comprise short-circuiting rings (35, 37) which are in the form of brackets and, as short-circuiting turns, are allocated to the free stator slots (5 and 12) and to the free stator slots (17 and 24).

4. Induction motor according to Claim 3, **characterized in that** the short-circuiting rings (35, 37), which are in the form of brackets, are arranged fixed in the slots (5 and 12; 17 and 24).

5. Induction motor according to Claim 4, **characterized in that** those sides (47, 49) of the short-circuiting rings (35, 37) (in the form of brackets) which are located in the slots (5 and 12, 17 and 24) in the stator (25) each have a V-shaped, sprung holding tongue (51).

6. Induction motor according to Claim 4, **characterized in that** the sides (45, 47) of the short-circuiting rings (35, 37) which are in the form of brackets can be locked in the slots (5 and 12; 17 and 24) in the stator (25) by means of securing elements (53) in the form of wedges.

## Revendications

1. Moteur à induction, en particulier moteur asynchrone monophasé avec un enroulement principal de stator (I, II) et un enroulement auxiliaire court-circuité, disposé décalé par rapport au premier, le stator (25) présentant des rainures (1-24), disposées les unes derrière les autres dans la direction périphérique, destinées à recevoir des bobines partielles (39, 41, 43, 45) de l'enroulement principal (I, II) et de l'enroulement auxiliaire, **caractérisé en ce que** l'enroulement principal (I, II) est constitué de quatre bobines partielles (39, 41, 43, 45) dont la largeur de bobine est choisie de manière qu'au milieu restent libres trois rainures (5, 6, 7 ; 17, 18, 19) et **en ce que** l'enroulement auxiliaire est associé à l'une des trois rainures (5, 6, 7 ; 17, 18, 19) restées libres au centre et à une rainure libre (12, 24) pratiquée à l'extérieur de l'enroulement principal (I, II) dans le stator (25).

2. Moteur à induction selon la revendication 1, dans lequel l'enroulement principal de stator est constitué d'un enroulement (I) et d'un enroulement (II), disposé en miroir par rapport au premier, l'axe de symétrie passe par l'axe du moteur et à chacun des enroulements (I et II) est associé un enroulement auxiliaire, **caractérisé en ce que** le stator (25) présente des rainures (1-12 et 13-24) disposées l'une derrière l'autre dans la direction périphérique (24) destinées à recevoir les bobines partielles (39, 41, 43, 45) des enroulements (I et II) et des deux enroulements auxiliaires.

3. Moteur à induction selon la revendication 2, **caractérisé en ce que** les enroulements auxiliaires sont constitués d'anneaux de court-circuit (35, 37) en forme d'étrier qui,en tant que spires de court-circuit,sont associés aux rainures de stator (5 et 12) libres ainsi qu'aux rainures de stator (17 et 24) libres.

4. Moteur à induction selon la revendication 3, **caractérisé en ce que** les anneaux de court-circuit (35, 37) en forme d'étrier sont disposés fixement dans les rainures (5 et 12 ; 17 et 24).

5. Moteur à induction selon la revendication 4, **caractérisé en ce que** les côtés (47, 49), qui se trouvent dans les rainures (5 et12 ; 17 et 24) du stator (25), des anneaux de court-circuit (35, 37) en forme d'étrier,présentent chacun une languette de maintien (51) élastique, en forme de V.

6. Moteur à induction selon la revendication 4, **caractérisé en ce que** les côtés (45, 47) des anneaux de court-circuit (35, 37) en forme d'étrier peuvent être bloqués, au moyen d'éléments de fixation (53) en forme de coin, dans les rainures (5 et 12 ; 17 et 24) du stator (25).
